# EUROPÄISCHE PATENTANMELDUNG

(11) **EP 4 297 190 A1**
(43) Veröffentlichungstag der Anmeldung: **27.12.2023**
(21) Anmeldenummer: 23181059.9
(22) Anmeldetag: 22.06.2023
(51) Int. Cl.: H01R 4/2406

(54) **ELEKTRISCHE LEITUNG**

(30) Priorität: 24.06.2022 DE 102022115853
(71) Anmelder: Wieland Electric GmbH, 96052 Bamberg (DE)
(72) Erfinder: Koch, Volker, 91365 Weilersbach (DE)
(74) Vertreter: Tergau & Walkenhorst Intellectual Property GmbH

(57) **Zusammenfassung**

Elektrische Leitung mit mindestens zwei isolierten Adern (3) und mit einer die einzelnen Adern (3) in einem Abschnitt der Leitung in einer vordefinierten Position zueinander fixierenden Positionierungsvorrichtung (4,4').

## Beschreibung

Die vorliegende Erfindung betrifft eine elektrische Leitung mit mindestens zwei isolierten Adern. Derartige isolierte Leitungen zur Stromführung beinhalten eine oder mehrere elektrische Adern für ein elektrisches Potenzial oder mehrere elektrische Potenziale. Jede dieser Adern weist einen eigenen Isoliermantel auf, um gegenüber den übrigen Adern der Leitung elektrisch abgeschirmt und isoliert zu sein. Die Adern können aus starren ein- oder mehrdrätigen Kupferleitern oder auch aus flexiblen Litzen aus leitfähigem Material bestehen. Der Isoliermantel besteht in der Regel aus Kunststoff. Derartige elektrische Leitungen sind als Rundleitungen, Flachleitungen oder Bandleitungen hinreichend bekannt. Es ist auch möglich, einzelne Adern durch Kabelschläuche oder wendelförmige Kabelspiralen zu einer Leitung zusammenzufassen.

Im industriellen Bereich ist die sogenannte Durchdringungskontaktierung bzw. Schneid-Klemm-Kontaktierung bekannt. Dabei wird ein Kontaktelement, in der Regel ein Kontaktdorn oder eine Kontaktspitze durch den Isoliermantel der zu kontaktierenden Ader getrieben, bis der Kontaktdorn bzw. die Kontaktspitze die Ader sicher kontaktiert. Die Kontaktdorne bzw. Kontaktspitzen sind in sogenannten Abgriffen angeordnet. Den Abgriffen sind in der Regel sogenannte Flachleitungen zugeordnet, bei welchen die einzelnen isolierten Adern fest nebeneinander mit demselben Abstand angeordnet sind wie die Kontaktdorne bzw. Kontaktspitzen im zugehörigen Abgriff. Derartige Flachleitungen sind jedoch schlecht zu handhaben, weil sie eigentlich nur für eine Verlegung in einer Ebene geeignet sind. Sollen die einzelnen Adern Richtungsänderungen vollziehen, ist dies nur mit relativ großen Biegeradien möglich. Außerdem ist es bei derartigen Flachleitungen stets nur möglich, sämtliche miteinander parallel laufenden Adern gemeinsam zu verlegen. Schließlich ist nachteilhaft, dass für jeden Abgriff eine spezielle Flachleitung vorgehalten werden muss.

Ausgehend hiervon liegt der Erfindung die Aufgabe zugrunde, eine elektrische Leitung sozugestalten, dass die einzelnen Adern möglichst unabhängig voneinader verlegt werden können und eine Durchdringungskontaktierung gleichwohl möglich ist.

Diese Aufgabe ist durch die Merkmalskombination des Anspruchs 1 in erfinderischerweise gelöst. Die rückbezogenen Ansprüche beinhalten teilweise vorteilhafte und teilweise für sich selbst erfinderische Weiterbildungen dieser Erfindung.

Gemäß der Erfindung weist die elektrische Leitung mindestens zwei isolierte Adern auf. Die Adern können beliebig zueinander verlaufen. Erfindungsgemäß ist weiterhin eine Positionierungsvorrichtung vorgesehen, welche die einzelnen Adern in einem vordefinierten Abschnitt der elektrischen Leitung in einer vordefinierten Position zueinander fixiert. Diese vordefinierte Position kann bspw. auf einen Abgriff so abgestimmt sein, dass die im Abgriff angeordneten Kontaktelemente die vordefiniert zueinander positionierten Adern der elektrischen Leitung zuverlässig kontaktieren können.

In bevorzugter Weiterbildung der Erfindung ist an der Positionierungsvorrichtung jeweils eine separate Aufnahmenut für jede Ader vorgesehen. Die Aufnahmenuten können vorzugsweise u- oder c-förmig sein und umfassen so die jeweilige Ader zuverlässig und positionieren sie ebenso zuverlässig, lassen jedoch einen Teilbereich der Ader frei, um dort die Ader bspw. mit einer Kontaktspitze oder einem Kontaktdorn zu durchdringen. Es ist aber ebenso gut möglich, die Aufnahmenuten als o-förmige bzw. ringförmige, die jeweilige Ader umschließende Aufnahmenut auszugestalten.

In weiterer vorteilhafter Ausgestaltung können bezogen auf die elektrische Leitung mehrere in einem Längsabstand zueinander angeordnete Positionierungsvorrichtungen angeordnet sein. Besonders vorteilhaft kann es in diesem Zusammenhang sein, zunächst zwei Positionierungsvorrichtungen mit ringförmig geschlossenen Aufnahmenuten an der elektrischen Leitung anzuordnen und zwischen diesen beiden Positionierungsvorrichtungen eine dritte Positionierungsvorrichtung mit teilweise offenen, bspw. c- oder u-förmigen Aufnahmenuten anzuordnen. Auf diese Weise ist eine sichere Anordnung der Adern zueinander im Bereich der Positionierungsvorrichtungen gewährleistet, ohne die mit der Erfindung verbunde Flexibilität bei der Verlegung der restlichen elektrischen Leitung zu verzichten.

Als besondere Ausführungsform ist eine ringförmige Positionierungsvorrichtung vorgesehen. Diese ringförmige Positionierungsvorrichtung weist vorzugsweise in gleichen Abständen zueinander angeordnete Aufnahmenuten auf. Die Aufnahmenuten sind auf einem Teilkreis angeordnet und entweder geschlossen oder teilweise geöffnet. Bei der geöffneten Variante der Aufnahmenuten ist die Mantelfläche der ringförmigen Positionierungsvorrichtung durch eine der Anzahl der Aufnahmenuten entsprechende Anzahl von Durchbrechungen durchbrochen, um die einzelnen Adern in die Aufnahmenuten der ringförmigen Positionierungsvorrichtung einführen zu können.

Eine weitere bevorzugte Ausgestaltung der Positionierungsvorrichtung sieht eine linienförmige Anordnung der Aufnahmenuten nebeneinander vor. Die Nutseitenwände stehen bei dieser Ausführungsform nach Art von Zinken eines Kamms nach oben und die einzelnen Adern sind in den Nuten zwischen diesen kammzenkenartigen Nutseitenwänden eingebettet.

Erfindungsgemäß ist es vorteilhaft, die einzelnen Adern im Bereich der Positionierungsvorrichtungen mit entsprechenden Abgriffen mittels eines Durchdringungskontakts, insbesondere eines Kontaktdorns zu kontaktieren.

Anhand der nachfolgend erläuterten Ausführungsbeispiele ist die Erfindung mit weiteren Einzelheiten erläutert. Es zeigen:
- Fig. 1: eine kombinierte Anordnung zweier Positionierungsvorrichtungen mit oförmigen Aufnahmenuten einerseits und mit u-förmigen Aufnahmenuten andererseits, jeweils in einer linienförmigen Anordnung,
- Fig. 2: eine kombinierte Anordnung zweier Positionierungsvorrichtungen mit oförmigen Aufnahmenuten einerseits und mit u-förmigen Aufnahmenuten andererseits, jeweils in einer ringförmige Anordnung,
- Fig. 3: eine elektrische Leitung mit mehreren in einem wendelförmigen Schlauch zusammengefassten Adern,
- Fig. 4: den Schlauch aus Fig. 3 mit aufgefächerten Einzeladern in Fig. 4a und mit einer die Adern aus Fig. 4a positionierenden erfindungsmäßigen Positionierungsvorrichtung in Fig. 4b sowie
- Fig. 5: eine erfindungsmäßige Positionierungsvorrichtung mit aufgesatteltem Abgriff und mit einem den Abgriff und die Positionierungsvorrichtung abdeckenden Deckel.

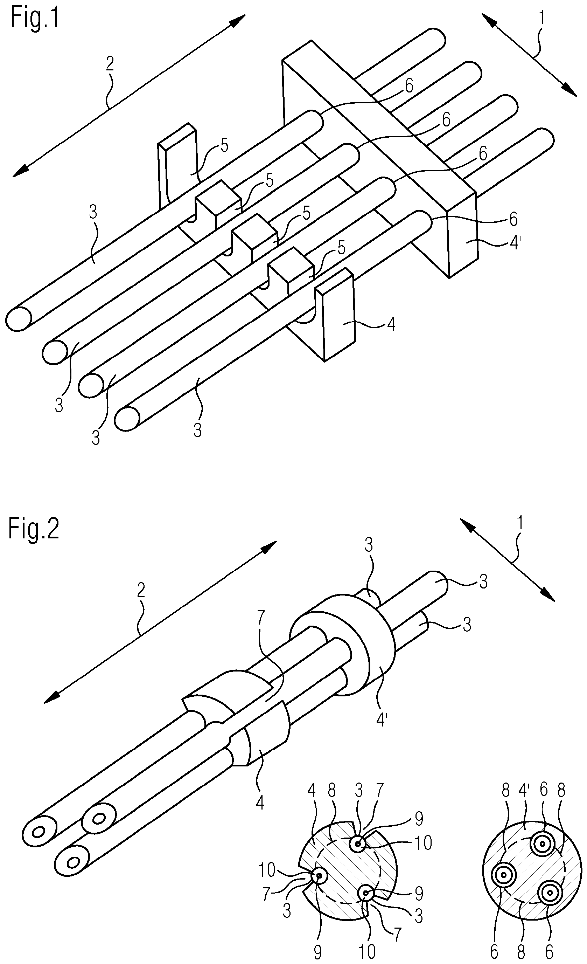

Die in Fig. 1 dargestellte elektrische Leitung besteht aus den in Fig. 1 in Querrichtung 1 nebeneinander angeordneten und in Längsrichtung 2 verlaufenden einzelnen Adern 3. Eine erfindungsmäßige Positionierungsvorrichtung 4 weist vier nebeneinander angeordnete, u-förmige Aufnahmenuten 5 auf. Die u-förmigen Aufnahmenuten 5 sind erkennbar nach oben offen. In Längsrichtung 2 neben der vorerwähnten Positionierungsvorrichtung 4 ist eine weitere Positionierungsvorrichtung 4' angeordnet mit o-förmigen, geschlossenen Aufnahmenuten 6. Die Positionierungsvorrichtung 4' mit ihren o- förmigen Aufnahmenuten 6 dient zur Vorpositionierung der einzelnen Adern 3 zueinander, während die kammartige Positionierungsvorrichtung 4 mit den u-förmigen, nach oben offenen Aufnahmenuten 5 einen Teil der Adern 3 freilässt.

Eine weitere Ausführungsform einer Positionierungsvorrichtung 4 mit c-förmigen Aufnahmenuten 7 zeigt Fig. 2. In den c-förmigen Aufnahmenuten 7 sind die Adern 3 gleichsam verschnappt. Während die Adern 3 in die u-förmigen Aufnahmenuten 5 der in Fig. 1 dargestellten Positionierungsvorrichtung 4 lediglich eingelegt sind, sind die Adern 3 in die c-förmigen Aufnahemnuten 7 der in Fig. 2 dargestellten Positionierungsvorrichtung 4 eingeschnappt. Diese Schnappverbindung der Adern 3 in den c-förmigen Aufnahmenuten 7 verhindert ein Herausfallen der Adern 3 aus den Aufnahmenuten 7 in Querrichtung 1.

Auch Fig. 2 zeigt neben der ringförmigen bzw. zylinderförmigen Positionierungsvorrichtung 4 mit teilweise geöffneten Aufnahmenuten 7 eine weitere Positionierungsvorrichtung 4' mit o-förmigen Aufnahmenuten 6. Die beiden Positionierungsvorrichtungen 4,4' in Fig. 2 sind jeweils kreisförmig bzw. zylinderförmig und ermöglichen so die Anordnung der Adern 3 auf einem Teilkreis 8.

In der Darstellung der Fig. 2 ist weiterhin erkennbar, dass jede Ader 3 einen zentralen Leiter 9 aus Kupfer aufweist und einen den Leiter 9 einbettenden Isoliermantel 10.

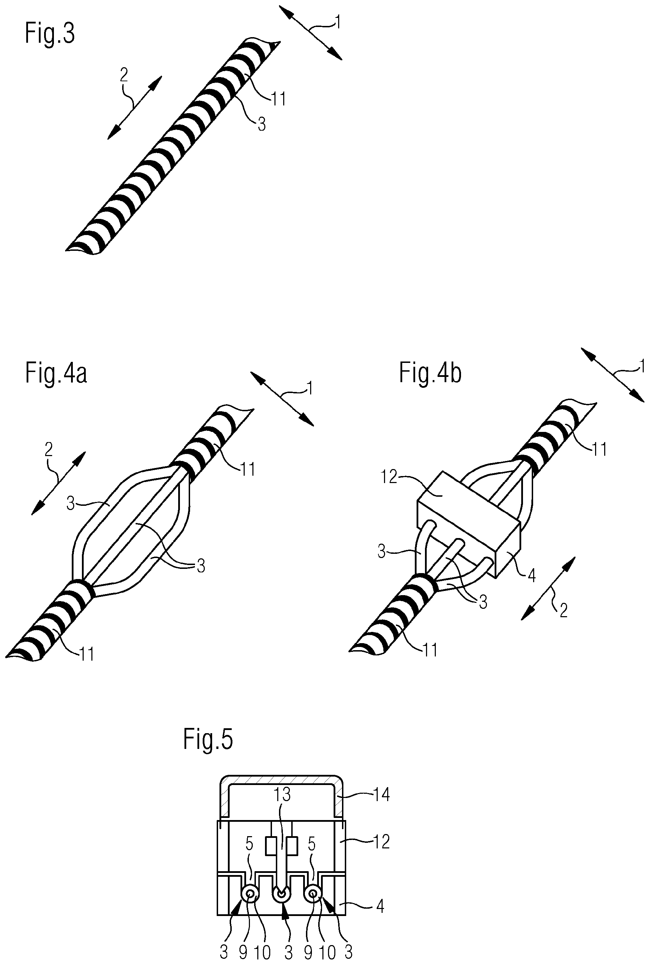

Fig. 3 zeigt einen wendelförmigen Kabelschlauch 11 mit mehreren darin angeordneten Adern 3. In Fig. 4a ist ein Teil des Kabelschlauchs 11 entfernt, sodass die Adern 3 derartig zugänglich sind, dass sie nebeneinander aufgefächert angeordnet werden können. Fig. 4b zeigt eine Positionierungsvorrichtung 4 mit u-förmigen Aufnahmenuten 5 für die Adern 3. Auf die Positionierungsvorrichtung 4 ist ein Abgriff 12 zur Kontaktierung der Adern 3 bzw. der in den Adern 3 verlaufenden Leiter 9 aufgesetzt. Die Funktionsweise dieses Abgriffs 12 ist anhand der Fig. 5 weiter erläutert:

Fig. 5 zeigt im unteren Teil eine Positionierungsvorrichtung 4 mit u-förmigen Aufnahmenuten 5. Ferner sind die in den Aufnahmenuten 5 einliegenden Adern 3 erkennbar mit ihren Leitern 9 und ihren die Leiter 9 einbettenden Isoliermantel 10.

Auf die Positionierungsvorrichtung 4 ist der Abgriff 12 aufgesetzt. Aus dem Abgriff 12 ragt nach unten in Richtung auf die Positionierungsvorrichtung 4 ein Kontaktdorn 13 eines Durchdringungskontakts ab. Der Kontaktdorn 13 durchdringt erkennbar den Isoliermantel 10 der mittleren Ader 3 und kontaktiert so den Leiter 9 der mittleren Ader 3 in Fig. 5. Schließlich ist noch ein auf den Abgriff 12 aufgesetzter Deckel 14 in Fig. 5 erkennbar.

### Bezugszeichenliste

- 1: Querrichtung
- 2: Längsrichtung
- 3: Ader
- 4,4': Positionierungsvorrichtung
- 5: u-förmige Aufnahmenut
- 6: o-förmige Aufnahmenut
- 7: c-förmige Aufnahmenut
- 8: Teilkreis
- 9: Leiter
- 10: Isoliermantel
- 11: Kabelschlauch
- 12: Abgriff
- 13: Kontaktdorn
- 14: Deckel

## Patentansprüche

1. Elektrische Leitung mit mindestens zwei isolierten Adern (3),
**gekennzeichnet durch**
eine die einzelnen Adern (3) in einem Abschnitt der Leitung in einer vordefinierten Position zueinander fixierende Positionierungsvorrichtung (4,4').

2. Leitung nach Anspruch 1,
**gekennzeichnet durch**
jeweils eine separate, die jeweilige Ader (3) zumindest teilweise umschließende Aufnahmenut (5,6,7) für jede Ader (3) der elektrischen Leitung.

3. Leitung nach Anspruch 1 oder 2,
**gekennzeichnet durch**
mehrere mit Längsabstand zueinander abgeordnete Positionierungsvorrichtungen (4,4').

4. Leitung nach einem der Ansprüche 2 oder 3,
**gekennzeichnet durch**
eine ringförmige Positionierungsvorrichtung (4,4') mit mehreren auf einem Teilkreis (8) angeordneten Aufnahmenuten (5, 6, 7).

5. Leitung nach Anspruch 2 oder 3,
**gekennzeichnet durch**
eine linienförmige Positionierungsvorrichtung (4,4') mit mehreren nebeneinander angeordneten Aufnahmenuten (5, 6, 7).

6. Leitung nach einem der Ansprüche 1 bis 5,
**dadurch gekennzeichnet,**
**dass** eine oder mehrere Adern (3) im Bereich einer Positionierungsvorrichtung (4,4') mittels eines Kontaktdorns (13) eines Durchdringungskontakts kontaktiert werden.
